# EUROPÄISCHE PATENTSCHRIFT

(11) **EP 2 127 919 B1**
(45) Veröffentlichungstag und Bekanntmachung des Hinweises auf die Patenterteilung: **07.05.2014**
(21) Anmeldenummer: 09170452.8
(22) Anmeldetag: 29.03.2007
(51) Int. Cl.: B60G 7/02, B60G 9/00, B62D 61/12

(54) **Fahrzeugachse**
Vehicle axle
Essieu de véhicule

(30) Priorität: 04.04.2006 DE 102006015672
(43) Veröffentlichungstag der Anmeldung: 02.12.2009
(62) Teilanmeldung aus: 07006521.4
(73) Patentinhaber: BPW Bergische Achsen KG, 51674 Wiehl (DE)
(72) Erfinder: Siebel, Reiner, 53809 Ruppichteroth (DE); Schwarz, Michael, 51469 Bergisch Gladbach (DE)
(74) Vertreter: Christophersen & Partner

(56) Entgegenhaltungen:
- EP-A1- 1 300 265
- EP-A1- 1 625 955
- EP-A2- 1 134 047
- WO-A-02/21012
- DE-B4- 10 053 411
- US-A- 4 181 189
- US-A1- 2004 080 132
- US-B1- 6 585 223

## Beschreibung

Die Erfindung betrifft eine Fahrzeugachse, insbesondere für Schwerlastfahrzeuge, nach dem Oberbegriff des Patentanspruchs 1.

Eine Fahrzeugachse dieser Art ist aus der US 6,585,223 bekannt. Das in Fahrtrichtung hintere Ende jedes Längslenkers ist jeweils gegen ein Buchsengehäuse verschweißt, durch das der Bolzen hindurchführt, wobei sich zwischen dem Bolzen und der Innenwandung des Buchsengehäuses ein Elastomerelement befindet. Buchsengehäuse und Elastomerelement sind nicht, wie sonst üblich, von kreisförmigem Querschnitt, sondern weisen einen elliptischrunden Querschnitt auf, wodurch ein Verdrehen des Elastomerelements innerhalb des Buchsengehäuses erschwert wird. Das Anschweißen des Längslenkers außen an dem Buchsengehäuse erfordert allerdings zunächst eine entsprechende Konturierung des Längslenkerendes, d. h. eine Gestaltung entsprechend der elliptischen Rundung des Buchsengehäuses. Hiermit verbunden ist ein erhöhter fertigungstechnischer Aufwand.

Aus der WO 03/018334 A1 ist eine Fahrzeugachse bekannt, bei der die Längslenker auf beiden Seiten des Fahrzeugs mit ihrem vorderen Ende in einer Konsole unterhalb des Fahrzeugchassis angelenkt sind.

Am hinteren Ende der Längslenker ist ein rohrförmiges Anschlussstück angeformt, welches im Durchmesser in etwa dem des Achskörpers entspricht und von der Seite her gegen diesen verschweißt ist. Die Längslenker und das rohrförmige Anschlussstück sind in Schalenbauweise aus tiefgezogenen Ober- und Unterschalen zusammengesetzt, die entlang der Mittelebene des Lenkers gegeneinander verschweißt sind. Die Schweißnähte erstrecken sich beidseits des Längslenkers sowie des rohrförmigen Anschlussstücks.

Aus der DE 100 53 411 B4 ist eine Fahrzeugachse bekannt, bei der die hinteren Enden der Längslenker einstückig in den Achskörper übergehen. Die beiden Längslenker sind gemeinsam mit dem gesamten Achskörper in Schalenbauweise gefertigt.

Es die **Aufgabe** der Erfindung, eine Fahrzeugachse der eingangs genannten Art anzugeben, die sich durch eine in fertigungstechnischer Hinsicht vorteilhafte Bauweise auszeichnet.

Zur **Lösung** wird eine Fahrzeugachse mit den Merkmalen des Patentanspruchs 1 vorgeschlagen.

Bei einer solchen Fahrzeugachse sind die Enden der Längslenker jeweils gegen ein Buchsengehäuse verschweißt, durch das der Bolzen hindurchführt, wobei sich in dem Zwischenraum zwischen Bolzen und Buchsengehäuse ein Elastomerelement befindet.

Durch ein Verschweißen der vorderen Enden der Längslenker gegen das Buchsengehäuse, welches innerhalb eines Elastomerelements den Bolzen aufnimmt, ergibt sich eine Fahrzeugachse mit fertigungstechnischen Vorteilen gegenüber dem Stand der Technik. Da Bestandteil des Buchsengehäuses eine flache Rückwand ist, und der jeweilige Längslenker an dieser Rückwand angeschweißt wird, werden die erforderlichen Schweißnähte kurz gehalten. Außerdem hat die durch die flache Rückwand verursachte unrunde Gestaltung des Buchsengehäuses den Vorteil, dass sich das darin bündig eingebettete Elastomerelement nicht in der Buchse verdrehen kann.

Durch ein Verschweißen der Längslenker von vorne gegen den durchgehenden Achskörper ergibt sich eine Fahrzeugachse mit fertigungstechnischen Vorteilen gegenüber dem Stand der Technik. Insbesondere werden die erforderlichen Schweißnähte kurz gehalten.

Eine weitere Ausgestaltung sieht vor, dass der Achskörper im Wesentlichen ein Rohr ist, an dessen Vorderseite Anschlüsse für die Längslenker angeformt sind. Das Ausbilden von Anschlüssen an der Vorderseite, d.h. dem im wesentlichen in Fahrtrichtung weisenden Mantelbereich des Achskörpers, erlaubt einen hinsichtlich des Kräfteverlaufs günstigen Übergang zwischen Längslenker und Achskörper. Kerbwirkungen im Übergang zwischen Längslenker und Achskörper werden vermieden.

Bei einer weiteren Ausgestaltung können die Enden der Längslenker stumpf gegen die Anschlüsse verschweißt sein, wodurch sich eine vergleichsweise einfache Nahtvorbereitung ergibt. Alternativ können die Längslenker auch in einer Überlapp-Verschweißung gegen entsprechende Anschlüsse verschweißt werden.

Bei einer für die mechanische Stabilität des Verbunds aus dem Achskörper sowie den beiden Längslenkern vorteilhaften Ausgestaltung sind die Anschlüsse von dem Achsrohrquerschnitt nach außen durchgestellte Ringbereiche von vorzugsweise kreisförmiger, elliptischer oder ovaler Gestalt sind. Durch das nach außen Durchstellen wird ein günstiger Kraftfluss erzielt und es werden Kerbspannungen im Anschlussbereich vermieden.

Da der Achskörper im Fahrbetrieb auf Torsion belastet wird, ist es für die Anbindung der Längslenker von Vorteil, wenn die längere Bezugsachse des elliptischen bzw. ovalen Ringbereiches parallel zur Längsrichtung des Achskörpers liegt.

Für ein definiertes Tordieren des Achskörpers im Fahrbetrieb ist es ferner von Vorteil, wenn der Achskörper zumindest auf einer Teillänge mit sich in dessen Längsrichtung erstreckenden Einbuchtungen versehen ist, die dessen Torsionssteifigkeit bereichsweise reduzieren. Von Vorteil ist, wenn sich derartige Einbuchtungen ausschließlich im Bereich zwischen den Anschlüssen erstrecken, so dass die mit den Anschlüssen versehenen Achskörperbereiche nicht der Torsion des mittleren Achskörperbereiches unterliegen, sondern sich vergleichsweise steif verhalten.

Bei einer weiteren Ausgestaltung sind die Längslenker an ihrer Unterseite mit einer Abrollfläche versehen, die mit einer Hebevorrichtung zusammenwirkt. Die EP 0 961 726 B1 zeigt eine Achskonstruktion mit nach Art von Lenkerfedern gestalteten Längslenkern. Unterhalb des eigentlichen Lenkers ist ein Schwenkarm gelagert, der mit der mit der Hebevorrichtung zum Anheben der Achse zusammenwirkenden Abrollfläche versehen ist. Ein solches Bauteil ist durch Anformen der Abrollfläche direkt am Längslenker entbehrlich, wodurch sich die Gesamtbauteilzahl reduziert und sich eine weitere bauliche Vereinfachung der Fahrzeugachse im Falle einer Liftachse einstellt.

Vorteilhaft handelt es sich bei dem Längslenker um einen zumindest zum Achsrohr hin offenen Hohlkörper, was zu einer Reduktion des Gewichtes der Fahrzeugachse beiträgt.

Bei einer weiteren Ausgestaltung ist der Längslenker aus einer oberen Schale und einer unteren Schale zusammengesetzt. Eine solche Schalenbauweise erlaubt den Einsatz komplex gestalteter Längslenker mit über deren Länge variablem Querschnitt für den Fall, dass eine einstückige Bauweise nicht oder nur mit deutlich höherem Fertigungsaufwand möglich wäre.

Bei einer weiteren Ausgestaltung sind an der Rückseite des Achskörpers Tragarme an Anschlüsse angeschweißt. Auch für die im rückseitigen Mantelbereich der Fahrzeugachse vorgesehenen Tragarme zur Aufnahme z.B. eines Luftfaltenbalgs ergibt sich damit eine fertigungstechnisch vorteilhafte Anbindung an den Achskörper.

In diesem Zusammenhang ist es insbesondere von Vorteil, wenn sich die Anschlüsse für die Längslenker und für die Tragarme in Bezug auf den Achskörper gegenüberliegen.

Weitere Einzelheiten und Vorteile werden nachfolgend unter Zuhilfenahme der beigefügten Zeichnungen erläutert. Darin zeigen:
- Fig. 1: eine teils geschnittener Seitenansicht eine Fahrzeugachse, wobei diese vom Liftachstyp ist,
- Fig. 2: eine perspektivische, nicht erfindungsgemässe Darstellung des Verbunds aus Achskörper, Längslenkern und Tragarmen,
- Fig. 3: eine Schnittdarstellung gemäß der in Fig. 2 mit III-III bezeichneten Schnittebene,
- Fig. 4: eine der Fig. 3 vergleichbare Schnittdarstellung, jedoch bei einer anderen Ausführungsform,
- Fig. 5: den Bereich V in Fig. 4 in vergrößertem Maßstab und
- Fig. 6: in einer weiteren Ausführungsform eine im Schnitt dargestellte Fahrzeugachse.

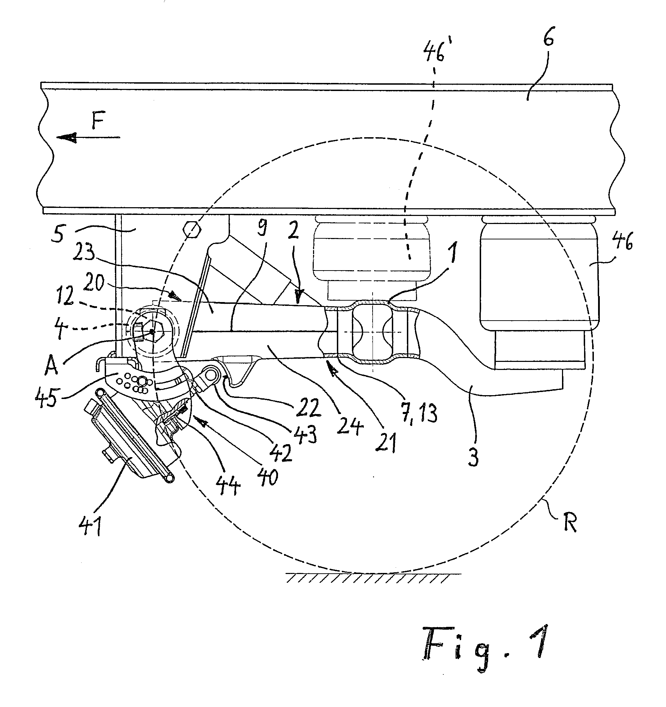

Eine Fahrzeugachse für Schwerlastfahrzeuge, wie etwa Lkw-Anhänger, ist in Fig. 1 von der Seite her und teilweise geschnitten dargestellt. Wesentlicher Bestandteil der Fahrzeugachse ist ein sich von einer Seite des Fahrzeugs bis zur gegenüberliegenden Fahrzeugseite erstreckender, d. h. durchgehender Achskörper 1. An den Enden des Achskörpers 1 sind die Fahrzeugräder in bekannter Weise über z. B. Achsschenkel drehbar gelagert. Bei dem anhand der Ausführungen beschriebenen Achskörper 1 handelt es sich um ein im Querschnitt im wesentlichen quadratisch gestaltetes Vierkantrohr. Jedoch sind nicht nur Vierkantrohre, vielmehr auch Achskörper jedweden Querschnitts und insbesondere auch zylindrische Achsrohre möglich. Über eine Luftfeder 46, die auf einem nach hinten ragenden Tragarm 3 sitzt, ist der Achskörper 1 gegen ein Fahrzeug-Chassis 6 abgestützt. Die Luftfeder kann sich auch unmittelbar über dem Achskörper 1 befinden, vgl. hierzu die in Fig. 1 gestrichelt eingezeichnete Luftfeder 46'.

Bei Fahrzeugachsen hängt der Fertigungsaufwand wie auch die mit Kosten verbundene Fertigungszeit wesentlich von der Länge der Schweißverbindungen ab. Neben der reinen Schweißzeit ist auch die Schweißnahtvorbereitung zeitaufwendig und kostenintensiv.

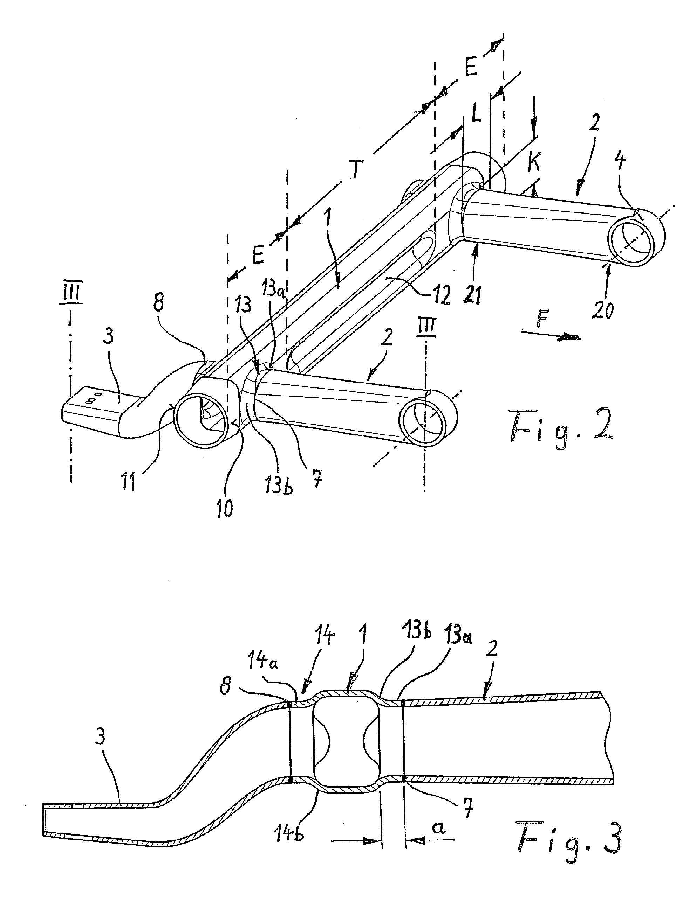

Mit dem durchgehenden Achsrohr 1 in dessen Endbereichen E (vgl. Fig. 2) starr verbunden sind zwei Längslenker 2. Diese sind an ihrem in Fahrtrichtung F betrachtet vorderen Ende 20 chassisfest angelenkt und mit ihrem rückwärtigen Ende 21 von vorne her gegen den Achskörper 1 oder gegen den Mantel des Achskörpers verschweißt. Zur chassisfesten Anlenkung jedes Längslenkers 2 dient eine unterhalb des Fahrzeug-Chassis 6 angeordnete Stütze 5, in welcher der Längslenker 2 um die in Fig. 1 mit A bezeichnete Achse schwenkbar gelagert ist. Diese Lagerung kann auch elastisch in einer vertikal nachgiebigen Gummibuchse 12 erfolgen.

Einzelheiten der Schweißverbindung 7 des hinteren Endes 21 des Längslenkers 2 mit dem Achskörper 1 werden später anhand der Fign. 2 und 3 ausführlich beschrieben.

Bei der in Fig. 1 dargestellten Fahrzeugachse handelt es sich um eine sogenannte Liftachse, die bei Bedarf über eine Hebevorrichtung 40 anhebbar ist, so dass die in Fig. 1 strichliniert angedeuteten Räder R den Kontakt zur Fahrbahn verlieren. Die Hebevorrichtung 40 ist unterhalb der Stütze 5 an einem Stützelement 45 festgelegt. Die Hebevorrichtung 40 setzt sich im wesentlichen zusammen aus einem Druckmittelzylinder 41, aus dem eine Kolbenstange 42, geführt von einer Führung 44, ein- bzw. ausfahrbar ist. Am Ende der Kolbenstange 42 sitzt eine frei drehbare, zylindrische Rolle 43, die an einer evolventenförmig gestalteten Abrollfläche 22 des Längslenkers 2 abrollt. Beim Ausfahren der Kolbenstange 42 rollt die Rolle 43 weitgehend querkraftfrei entlang der speziell geformten Abrollfläche 22, wodurch der Längslenker 2 und mit diesem der Achskörper 1 sowie auch die Fahrzeugräder nach oben verschwenkt werden. Bei Bedarf, z.B. bei beladenem Fahrzeuganhänger, wird die Kolbenstange 42 wieder eingefahren, bis sich die Rolle 43 vollständig von der Abrollfläche 22 löst. Dadurch senken sich die Fahrzeugräder R auf die Fahrbahn ab und das Gewicht der Ladung stützt sich auch über diese Achse ab. Einzelheiten der Funktionsweise einer Anhebevorrichtung sind in der EP 0 961 726 B1 beschrieben.

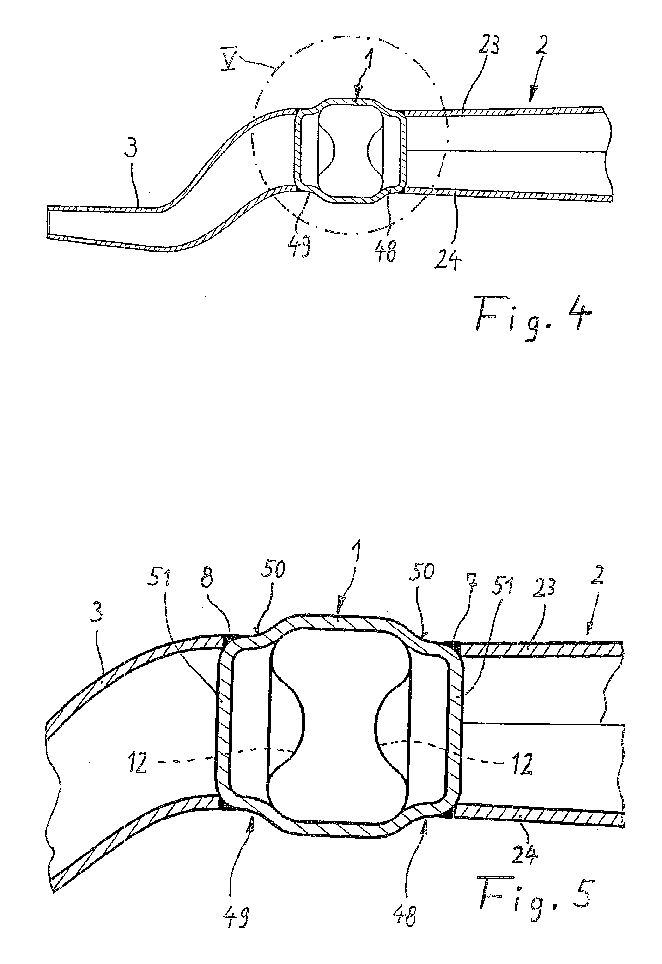

Der Längslenker 2 ist bei der Ausführung gemäß Fig. 1 und auch Fig. 4 in Schalenbauweise gefertigt, d.h. aus einer Oberschale 23 und einer Unterschale 24, die zu beiden Seiten über Schweißnähte 9 gegeneinander verschweißt sind. Die untere Schale 24 ist bei Fig. 1 mit einer muldenartigen Ausnehmung versehen, deren Oberfläche die Abrollfläche 22 für die Rolle 43 der Hebevorrichtung 40 bereitstellt, wohingegen die Oberschale 23 keine derartige Ausnehmung aufweist. Im Bereich der chassisfesten Anlenkung umschließt der Längslenker 2 eine zylindrische Hülse 4, über welche die höhenelastische Anlenkung in der Stütze 5 erfolgt. In der Hülse 4 befindet sich hierzu die höhenelastische Gummibuchse 12 (Fig. 1).

Die Schalenbauweise des Längslenkers 2 bietet sich für im Querschnitt komplex gestaltete Längslenker mit z.B. den beschriebenen evolventenförmigen Ausnehmungen 22 an. Ansonsten ist eine einstückige Bauart der Längslenker zu bevorzugen, wie sie z.B. in Fig. 2 dargestellt ist.

Einzelheiten der Verbindung des Achskörpers 1 mit den beiden Längslenkern 2 werden nachfolgend unter Zuhilfenahme der Fign. 2 und 3 erläutert.

Der Achskörper 1 ist an der in Fahrtrichtung F weisenden Vorderseite 10 mit Anschlüssen 13 versehen, an denen die sich quer zur Längsrichtung des Achskörpers 1 erstreckenden Längslenker 2 von vorne kommend angeschweißt sind. Die Anschlüsse 13 befinden sich an einem vom Achskörper 1 nach außen hin durchgestellten Ringbereich 13a, gegen den die gegenüberliegende Stirnfläche des Längslenkers 2 über eine Schweißnaht 7 stumpf verschweißt ist. Die Ringfläche 13a ist gegenüber der Mantelfläche des Achskörpers 1 erhaben und über einen gerundeten Übergang 13b mit dieser verbunden. Bei der Ausführung in Fig. 2 ist der Ringbereich 13a von in etwa ovaler bzw. elliptischer Gestalt. Die lange Achse L des Ringbereichs 13a erstreckt sich parallel zur Längsrichtung des Achskörpers 1, wohingegen die kurze Achse K quer zur Längsrichtung des Achskörpers 1 ausgerichtet ist. Aufgrund der elliptischen bzw. ovalen Anbindung ergibt sich eine gute mechanische Stabilität der Schweißverbindungen, worauf später noch im Einzelnen eingegangen werden wird.

Der perspektivischen, nicht erfindungsgemässen Darstellung in Fig. 2 lässt sich ferner entnehmen, dass sich der Querschnitt des Längslenkers 2 über dessen Länge ändert. Während am hinteren Ende 21 des Längslenkers 2 die lange Achse L der Ellipse bzw. des Ovals noch mit der Längsrichtung des Achskörpers 1 fluchtet, drehen sich diese Verhältnisse über die Länge des Längslenkers 2 um in etwa 90°, d.h. am vorderen Ende 20 ist die lange Achse im wesentlichen quer zur Längsrichtung des Achskörpers 1 ausgerichtet. Auch handelt es sich nicht mehr um ein geometrisch exaktes Oval bzw. eine Ellipse. Vielmehr ist der Querschnitt in diesem Bereich einem Rechteck angenähert. Bei dem in Fig. 2 und in Fig. 3 dargestellten Längslenker 2 handelt es sich um einen einstückig durch Umformen eines ursprünglich zylindrischen Rohres hergestellten Längslenker 2. Ein Verschweißen von Ober- und Unterschale wie bei der Ausführung nach Fig. 1 oder Fig. 4 ist nicht erforderlich.

Am vorderen Ende 20 weist der Längslenker 2 eine im wesentlichen sichel- bzw. halbkreisförmige Öffnung auf, in die die Lagerhülse 4 eingeschweißt ist. Am rückseitigen Ende 21 ist der Lenker 2 stumpf gegen den Anschluss 13 bzw. gegen dessen ovalen bzw. elliptischen Ringbereich 13a verschweißt. Der Darstellung in Fig. 3 gut entnehmen lässt sich die Änderung des Lenkerquerschnitts über dessen Länge, der vom Bereich der Schweißung 7 bis hin zu dessen vorderem Ende 20 divergiert. Die Ringfläche 13a ist gegenüber der Vorderseite 10 des Achskörpers 1 (Fig. 1) um den Abstand a erhaben. Im Übergang zwischen Ringfläche 13a und Vorderseite 10 befindet sich eine Rundung 13b. Aufgrund dieser Ausgestaltung des Anschlusses 13 werden im Fahrbetrieb bei Belastung des Achse Kerbwirkungen zwischen den starr verschweißten Längslenkern 2 und dem sich im Mittelbereich tordierenden Achskörper 1 vermieden.

Der Achskörper 1 weist über eine Teillänge T, die den Mittelbereich des Achskörpers bildet, eine von dessen Vorderseite 10 nach innen weisende Einbuchtung 12 auf. Eine ähnliche Einbuchtung befindet sich auch auf der Rückseite 11. Die Einbuchtungen 12 sind mit gerundeten Übergängen versehen und z.B. durch Prägen hergestellt. Sie reduzieren die Torsionssteifigkeit des Achskörpers 1 und erlauben es dem Achskörper 1 beim Überfahren von z.B. Fahrbahnunebenheiten diese in Form einer Verformungsarbeit durch Tordieren aufzunehmen. Weitere Anteile der Verformungsarbeit werden durch die elastische Buchse 12 (Fig. 1) in der Verbindungsstelle zwischen dem Längslenker 2 und der Stütze 5 aufgenommen. Die Einbuchtungen 12 erstrecken sich symmetrisch zur Achskörpermitte nur über eine Teillänge T. Die Endbereiche E sind nicht mit einer Einbuchtung versehen, weshalb sie im Fahrbetrieb nicht an der Torsion des übrigen Achskörpers teilnehmen. Die Endbereiche E führen vielmehr eine den Torsionen des mittleren Teils T folgende Drehbewegung aus, so dass der Bereich der Anschlüsse 13 frei von Torsionsspannungen bleibt.

Auf der Rückseite 11 sind die Tragarme 3 für die Aufnahme der Luftfeder 46 über Anschlüsse 14 ebenfalls durch Verschweißen befestigt. Auf Einzelheiten der Schweißverbindung 8 bzw. der Anschlüsse 14 wird zur Vermeidung unnötiger Wiederholungen auf die vorstehend ausführlich beschriebene Schweißverbindung 7 zwischen Längslenker 2 und Achskörper 1 verwiesen.

Sowohl die Anschlüsse 14 wie auch die Schweißnaht 8 sind identisch den Anschlüssen 13 bzw. der Schweißung 7. Die rückseitigen Anschlüsse 14 und die vorderseitigen Anschlüsse 13 liegen sich darüber hinaus deckungsgleich gegenüber.

Bei der Ausführungsform nach den Fign. 4 und 5 sind an dem Achskörper 1 anstelle der offenen Durchstellungen nach vorne und gegebenenfalls auch nach hinten ragende bzw. abstehende Befestigungsdome 48, 49 angeformt. Daran angesetzt und verschweißt sind die Halbschalen 23, 24 der Längslenker 2 bzw. der Tragarm 3. Durch die Form der wie Tafelberge aus der Querschnittskontur des Achskörpers 1 herausragenden Befestigungsdome 48, 49 ergeben sich an deren Flanken 50 günstige Schweißbadstützen für das Ziehen der Schweißnähte 7, 8. Die Befestigungsdome 48, 49 sind geschlossen dargestellt, jedoch können ihre flachen Mittelbereiche 51 auch offen sein.

Die Fahrzeugachse zeichnet sich gegenüber dem Stand der Technik insbesondere durch ihren einfachen und fertigungstechnisch vorteilhaften Aufbau aus. Insbesondere kann der Längslenker als einstückiges Bauteil hergestellt und über eine einzige, beispielsweise ovale oder elliptische Schweißnaht 7 von vorne her gegen den Achskörper 1 verschweißt werden.

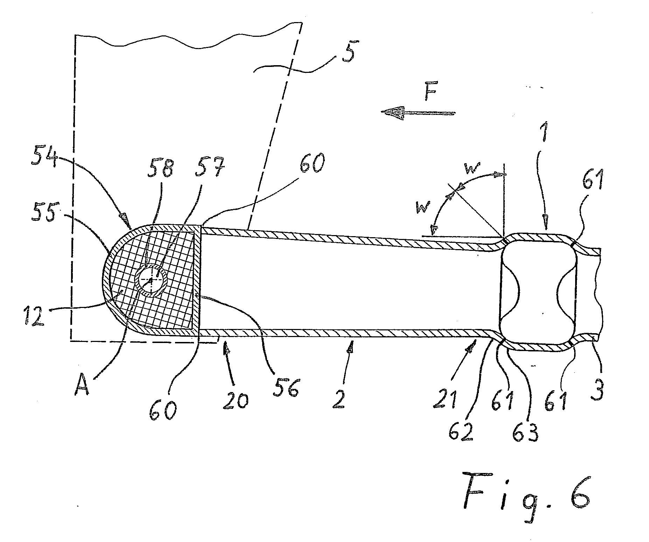

Die Figur 6 zeigt, wie das vordere Ende des Längslenkers 2 gelenkig an der Konsole 5 des Fahrzeugchassis angeordnet ist. Zu diesem Zweck ist das vordere Ende 20 des Längslenkers 2 an eine Rückwand 56 eines Buchsengehäuses 54 angeschweißt. Insgesamt setzt sich das Buchsengehäuse aus einer Halbrundwand 55 und der nach hinten weisenden, flachen Rückwand 56 zusammen. Die selbe Umfangsgestaltung weist das in dem Buchsengehäuse 54 angeordnete Elastomerelement 12 auf. Infolge dieser im Querschnitt unrunden Gestaltung des Buchsengehäuses 54 kann sich das darin bündig eingebettete Elastomerelement 12 nicht in der Buchse verdrehen. Auf diese Weise ist sichergestellt, dass das Elastomerelement 12, welches primär in vertikaler Richtung verformbar ist, seine Drehlage nicht ändert.

In dem Elastomerelement 12 sitzt eine Hülse 58, welche wiederum jenen Bolzen 57 umgibt, über den der Längslenker an der chassisfesten Konsole 5 angelenkt ist. Der Bolzen 57 fällt daher zusammen mit der Achse A (Fig. 1).

Da die Rückwand 56 des Buchsengehäuses 54 flach bzw. eben gestaltet ist, ist dort das Anschweißen das Längslenkers 2 entlang der Schweißnaht 60 fertigungstechnisch einfach möglich. Vor allem ist es möglich, den Längslenker 2 an seinem vorderen Ende ebenfalls eben zu gestalten, was die Fertigung auch des Längslenkers 2 vereinfacht. Wiederum ist es auch hier möglich, den Längslenker 2 zweiteilig aus einer Oberschale und einer Unterschale zusammenzusetzen.

Abweichend zu den Fahrzeugachsen nach den Fign. 1 bis 5 ist der Übergangsbereich zwischen Längslenker 2 und Achskörper 1. Die Schweißnaht 61 befindet sich hierbei in einem Winkel von ca. 45° zwischen einer Rundung 62 am hinteren Ende des Längslenkers 2, und einer entgegengesetzt gebogenen Rundung 63 am Achskörper 1. Die Anordnung der Schweißnaht 61 in einem Winkel von ca. 45° ist in Fig. 6 anhand der beiden Winkelbereiche w illustriert. Der Vorteil dieser Gestaltung liegt darin, dass der Achskörper 1 weniger stark verformt werden muss, um die Anschlussflächen für einerseits den Längslenker 2 und andererseits den Tragarm 3 bereitzustellen.

**Bezugszeichen**

| | | | |
|---|---|---|---|
| 1 | Achskörper | F | Fahrtrichtung |
| 2 | Längslenker | L | lange Achse |
| 3 | Tragarm | K | kurze Achse |
| 4 | Hülse | A | Achse |
| 5 | Konsole | T | Teillänge, Mittelbereich |
| 6 | Chassis | a | Abstand |
| 7 | Schweißnaht | E | Endbereich |
| 8 | Schweißnaht | R | (Fahrzeug)rad |
| 9 | Schweißnaht | w | Winkel |
| 10 | Vorderseite | | |
| 11 | Rückseite | | |
| 12 | Elastomerelement | | |
| 13 | Anschluss | | |
| 13a | Ringbereich | | |
| 13b | Rundung, Übergang | | |
| 14 | Anschluss | | |
| 14a | Ringbereich | | |
| 14b | Rundung | | |
| 20 | vorderes Ende | | |
| 21 | hinteres Ende | | |
| 22 | Abrollfläche | | |
| 23 | obere Schale | | |
| 24 | untere Schale | | |
| 40 | Hebevorrichtung | | |
| 41 | Druckmittelzylinder | | |
| 42 | Kolbenstange | | |
| 43 | Rolle | | |
| 44 | Führung | | |
| 45 | Stützelement | | |
| 46 | Luftfeder | | |
| 46' | Luftfeder | | |
| 48 | Befestigungsdom | | |
| 49 | Befestigungsdom | | |
| 50 | Flanke | | |
| 51 | Mittelbereich | | |
| 54 | Buchsengehäuse | | |
| 55 | Halbrundwand | | |
| 56 | Rückwand | | |
| 57 | Bolzen | | |
| 58 | Hülse | | |
| 60 | Schweißnaht | | |
| 61 | Schweißnaht | | |
| 62 | Rundung | | |
| 63 | Rundung | | |

## Patentansprüche

1. Fahrzeugachse, insbesondere für Schwerlastfahrzeuge, mit einem sich quer zur Fahrtrichtung (F) erstreckenden Achskörper (1) und zwei Längslenkern (2), die jeweils mit ihrem einen Ende (20) über einen sich quer zur Fahrtrichtung (F) erstreckenden Bolzen (57) an einer chassisfesten Konsole (5) anlenkbar und mit ihrem anderen Ende (21) mit dem Achskörper (1) verbunden sind, wobei die Enden (20) der Längslenker (2) jeweils gegen ein Buchsengehäuse (54) verschweißt sind, durch das der Bolzen (57) hindurchführt, und wobei sich in dem Zwischenraum zwischen Bolzen (57) und Buchsengehäuse (54) ein Elastomerelement (12) befindet und das Buchsengehäuse (54) und das darin angeordnete Elastomerelement (12) unrunde Querschnitte aufweisen, **dadurch gekennzeichnet, dass** Bestandteil des Buchsengehäuses (54) eine flache Rückwand (56) ist, gegen die der Längslenker (2) verschweißt ist, dass sich das Buchsengehäuse (54) zusätzlich zu der flachen Rückwand (56) aus einer Halbrundwand (55) zusammensetzt, und dass das in dem Buchsengehäuse (54) angeordnete Elastomerelement (12) die selbe Umfangsgestaltung aufweist.

2. Fahrzeugachse nach Anspruch 1, **dadurch gekennzeichnet, dass** das Elastomerelement (12) primär in vertikaler Richtung verformbar ist.

3. Fahrzeugachse nach Anspruch 1, **dadurch gekennzeichnet, dass** die anderen Enden (21) der Längslenker (2) von vorne her gegen den Achskörper (1) verschweißt sind.

4. Fahrzeugachse nach Anspruch 1, **dadurch gekennzeichnet, dass** der Achskörper (1) ein Rohr ist, an dessen Vorderseite (10) Anschlüsse (13) für die Längslenker (2) angeformt sind und dass die anderen Enden (21) der Längslenker (2) stumpf gegen die Anschlüsse (13) verschweißt sind.

5. Fahrzeugachse nach Anspruch 4, **dadurch gekennzeichnet, dass** die Anschlüsse (13) von dem Achsrohrquerschnitt nach außen durchgestellte Ringbereiche (13a) von vorzugsweise kreisförmiger, elliptischer oder ovaler Gestalt sind.

6. Fahrzeugachse nach Anspruch 1, **dadurch gekennzeichnet, dass** der Längslenker (2) zweiteilig ist und aus einer oberen Schale (23) und einer unteren Schale (24) zusammengesetzt ist.

7. Fahrzeugachse nach Anspruch 4, **dadurch gekennzeichnet, dass** an der Rückseite (11) des Achskörpers (1) Tragarme (3) an Anschlüssen (14) angeschweißt sind, und dass die Anschlüsse (13, 14) für die Längslenker (2) und für die Tragarme (3) sich in Bezug auf den Achskörper (1) einander gegenüberliegen.

## Claims

1. Vehicle axle, in particular for heavy goods vehicles, having an axle body (1) which extends transversely with respect to the direction of travel (F) and two longitudinal struts (2) which are in each case articulatedly connected with their one end (20) via a pin (57) extending transversely with respect to the direction of travel (F) to a chassis-mounted bracket (5) and connected with their other end (21) to the axle body (1), wherein the ends (20) of the longitudinal struts (2) are welded in each case to a sleeve housing (54) through which the pin (57) extends, and wherein an elastomer element (12) is situated in the intermediate space between the pin (57) and the sleeve housing (54), and the sleeve housing (54) and the elastomer element (12) which is arranged therein have non-circular cross sections, **characterized in that** part of the sleeve housing (54) is a flat rear wall (56) to which the longitudinal strut (2) is welded, **in that** the sleeve housing (54) is composed of a half round wall (55) in addition to the flat rear wall (56), and **in that** the elastomer element (12) arranged in the sleeve housing (54) has the same circumferential configuration.

2. Vehicle axle according to Claim 1, **characterized in that** the elastomer element (12) is primarily deformable in the vertical direction.

3. Vehicle axle according to Claim 1, **characterized in that** the other ends (21) of the longitudinal struts (2) are welded from the front to the axle body (1).

4. Vehicle axle according to Claim 1, **characterized in that** the axle body (1) is a tube, on the front side (10) of which connections (13) for the longitudinal struts (2) are integrally formed, and **in that** the other ends (21) of the longitudinal struts (2) are butt-welded to the connections (13).

5. Vehicle axle according to Claim 4, **characterized in that** the connections (13) are annular regions (13a) which are turned outward out of the axle tube cross section and which are preferably of circular, elliptical or oval design.

6. Vehicle axle according to Claim 1, **characterized in that** the longitudinal strut (2) is in two parts and is composed of an upper shell (23) and a lower shell (24).

7. Vehicle axle according to Claim 4, **characterized in that** support arms (3) are welded to connections (14) on the rear side (11) of the axle body (1), and **in that** the connections (13, 14) for the longitudinal struts (2) and for the support arms (3) are situated opposite one another with respect to the axle body (1).

## Revendications

1. Essieu de véhicule, en particulier pour véhicules poids-lourds, comprenant un corps d'essieu (1) s'étendant transversalement à la direction de conduite (F) et deux bras oscillants longitudinaux (2) qui peuvent être chacun articulés par l'une de leurs extrémités (20) par le biais d'un axe (57) s'étendant transversalement à la direction de conduite (F) à une console (5) fixée au châssis et qui sont connectés par leur autre extrémité (21) au corps d'essieu (1), les extrémités (20) des bras oscillants longitudinaux (2) étant soudées à chaque fois contre un boîtier de douille (54) à travers lequel passe l'axe (57), et un élément élastomère (12) se trouvant dans l'espace intermédiaire entre l'axe (57) et le boîtier de douille (54) et le boîtier de douille (54) et l'élément élastomère (12) disposé dans celui-ci présentant des sections transversales non circulaires, **caractérisé en ce qu'**une paroi arrière plate (56) fait partie du boîtier de douille (54), contre laquelle est soudé le bras oscillant longitudinal (2), **en ce que** le boîtier de douille (54) en plus de la paroi arrière plate (56) se compose d'une paroi semi-circulaire (55) et **en ce que** l'élément élastomère (12) disposé dans le boîtier de douille (54) présente la même configuration périphérique.

2. Essieu de véhicule selon la revendication 1, **caractérisé en ce que** l'élément élastomère (12) peut être déformé principalement dans la direction verticale.

3. Essieu de véhicule selon la revendication 1, **caractérisé en ce que** les autres extrémités (21) des bras oscillants longitudinaux (2) sont soudées par l'avant contre le corps d'essieu (1).

4. Essieu de véhicule selon la revendication 1, **caractérisé en ce que** le corps d'essieu (1) est un tube au niveau du côté avant (10) duquel sont façonnés des raccords (13) pour les bras oscillants longitudinaux (2), et **en ce que** les autres extrémités (21) des bras oscillants longitudinaux (2) sont soudées en aboutement contre les raccords (13).

5. Essieu de véhicule selon la revendication 4, **caractérisé en ce que** les raccords (13) sont des régions annulaires (13a) de forme de préférence circulaire, elliptique ou ovale, façonnées vers l'extérieur depuis la section transversale du tube d'essieu.

6. Essieu de véhicule selon la revendication 1, **caractérisé en ce que** le bras oscillant longitudinal (2) est en deux parties et se compose d'une coque supérieure (23) et d'une coque inférieure (24).

7. Essieu de véhicule selon la revendication 4, **caractérisé en ce que** des bras de support (3) sont soudés à des raccords (14) au niveau du côté arrière (11) du corps d'essieu (1), et **en ce que** les raccords (13, 14) pour les bras oscillants longitudinaux (2) et pour les bras de support (3) sont mutuellement opposés par rapport au corps d'essieu (1) .
